(19) Europäisches Patentamt

European Patent Office

Office européen des brevets

(11) EP 1 548 547 A1

(12) EUROPEAN PATENT APPLICATION

(43) Date of publication:
29.06.2005 Bulletin 2005/26

(51) Int Cl.⁷: **G06F 1/32**

(21) Application number: 03293337.6

(22) Date of filing: 24.12.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicants:
- **TEXAS INSTRUMENTS INCORPORATED Dallas, TX 75265 (US)**
- **Texas Instruments France 06271 Villeneuve Loubet Cedex, Nice (FR)**

(72) Inventors:
- **Bonavita, Frederic 06140 Tourettes sur Loup (FR)**
- **Guigon, Pascal 83440 Callian Fayance, Antibes (FR)**

(74) Representative: Holt, Michael
**Texas Instruments Limited, P.O. Box 5069 Northampton NN4 7ZE (GB)**

(54) **Method and apparatus for reducing memory current leakage in a mobile device**

(57) A processing system includes a processor (20) having an idle mode node for generating an idle mode signal indicating whether the processor is in an idle mode and a memory (22) having a data retention node for receiving a data retention mode signal. The memory includes circuitry for placing the memory in a low power state responsive to the data retention mode signal. The idle mode signal drives the data retention node, such that the memory is placed in the low power state when the processor is in idle mode.

FIG. 2a

**Description**

BACKGROUND OF THE INVENTION

1. TECHNICAL FIELD

This invention relates in general to electronic circuits and, more particularly, to a method and apparatus for reducing memory leakage in an electronic circuit.

2. DESCRIPTION OF THE RELATED ART

Over the last ten years, the popularity of mobile devices, including wireless telephones and personal digital assistants, has grown dramatically. For many users of mobile devices, power consumption is an extremely important factor, because such devices operate with a relatively small battery. It is desirable to maximize the battery life in these systems, since it is inconvenient to recharge or replace the batteries after short intervals.

One method to reduce power consumption involves placing various components in a low power state during periods where they are not in use. In some cases, a processing device, such as a general purpose processor or digital signal processor (DSP) can be placed in a low power state or completely powered down after storing its internal data to a non-volatile memory or a powered memory. Highspeed random access memory (RAM), however, can not be turned off completely and still retain its data; in order to reduce power and retain data, it may be placed in a "data retention mode". In data retention mode, data in the memory remains intact, but the RAM cannot be accessed. In a typical data retention mode, the supply voltage, Vcc, to the memory is reduced to decrease current leakage.

Many processing devices, such as DSPs, have an internal RAM. When updating a DSP architecture to take advantage of an internal RAM memory with a data retention mode, several approaches have been developed to determine time periods in which to place a memory in data retention mode, based on the operation of an associated processing core. Existing solutions are limited to optimization of the power consumption through complex external hardware or through complicated software. Such solutions add greatly to the cost of development and complicate the final design of a DSP.

Therefore, a need has arisen for a simplified method and apparatus for reducing current leakage in a memory using data retention mode.

BRIEF SUMMARY OF THE INVENTION

In the present invention, a processing system includes a processor (20) having an idle mode node for generating an idle mode signal indicating whether the processor is in an idle mode and a memory (22) having a data retention node for receiving a data retention mode signal. The memory includes circuitry for placing the memory in a low power state responsive to the data retention mode signal. The idle mode signal drives the data retention node, such that the memory is placed in the low power state when the processor is in idle mode.

The present invention provides significant advantages over the prior art. First, the power retention mode can be supported without any code modification in the processor. Particularly in the mobile phone technology, support for legacy software is critical, since the software tuning effort is greater than adding gates in an ASIC. Second, the power savings attributable to the retention mode of the memory are optimized; the memory is place in power retention mode whenever the processor is placed in idle mode.

In a second embodiment of the invention, the memory can be placed in data retention mode responsive to which of several idle modes is selected. Consequently, the wake-up latencies of the memory are tunable.

BRIEF DESCRIPTION OF THE SEVERAL VIEWS OF THE DRAWINGS

For a more complete understanding of the present invention, and the advantages thereof, reference is now made to the following descriptions taken in conjunction with the accompanying drawings, in which:

Figure 1a illustrates a block diagram of a prior art processing system using a processor and memory to reduce power consumption through a RAM with a data retention mode;

Figure 1b illustrates a timing diagram showing the initiation of the data retention mode in the prior art circuit of Figure 1a;

Figure 2a illustrates a block diagram of a processing system using a processor and memory with enhance power consumption reduction;

Figure 2b illustrates a timing diagram showing the initiation of the data retention mode in the prior art circuit of Figure 2a;

Figure 2c illustrates a decoder for a multiple bit idle mode code;

Figure 3 illustrates a block diagram of a mobile phone using the processing system of Figure 2a.

DETAILED DESCRIPTION OF THE INVENTION

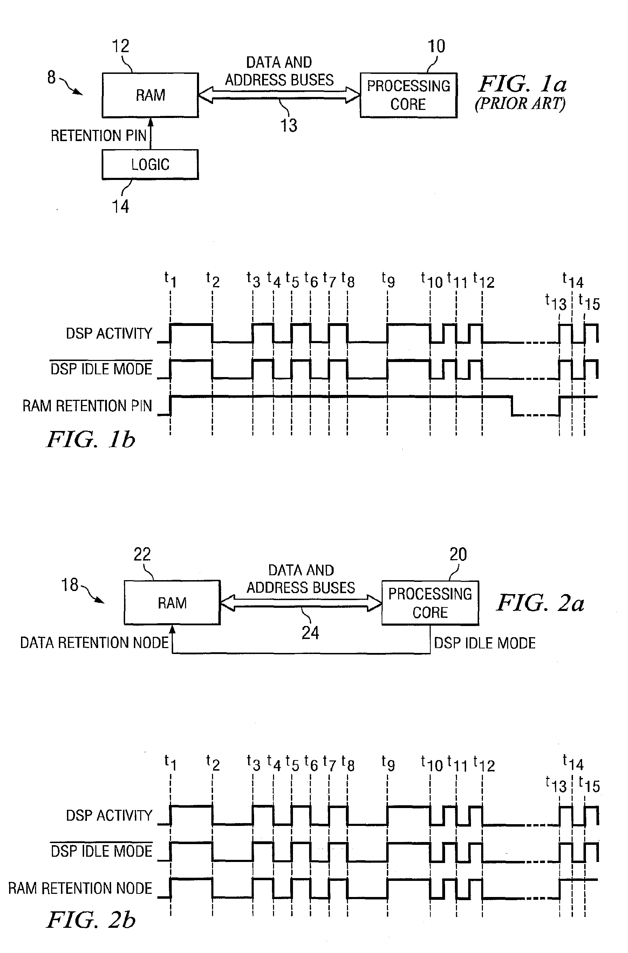

The present invention is best understood in relation to Figures 1-3 of the drawings, like numerals being used for like elements of the various drawings.

Figure 1a illustrates a simplified block diagram of prior art processing system 8 having a processing core 10 and associated internal memory 12. Logic 14 controls the data retention mode of the memory 12. The processing core 10 is coupled to the memory 12 in a normal fashion through data and address buses 13. Logic 14 monitors the activity of the processing core 10.

When a long idle period is detected, logic 14 provides a signal to the retention node of the RAM 12 that causes the RAM 12 to enter a low voltage state, in which the contents of the memory is retained. In this low voltage state, data cannot be written to nor read from the RAM 12. Logic 12 can be implemented using software or hardware.

Figure 1b illustrates a timing diagram showing periods of activity and inactivity, along with a retention control signal to the RAM 12. As shown, the logic 14 waits until the processing core activity has ceased for a sufficient time before placing the RAM 12 in the data retention state (in the illustrated embodiment, the retention state in entered when the RAM data retention node is pulled low).

The method of determining the time to enter data retention mode can be simple or complex. A simple method would enter retention mode after a predetermined time period has expired since the last processing core activity. A more complex method would vary the time from the last processing core activity based on the extent of the preceding activity.

In any case, adapting a processing core 10 of a DSP to make use of a memory with a retention node requires reprogramming the DSP. This can significantly increase the cost of the design.

In the embodiment shown in Figures 2a and 2b, a DSP 18 has a processing core 20 is configured to operate the retention node of a memory 20 without any additional code or hardware and with improved energy savings over the prior art. As can be seen in Figure 2a, processing core 20 is coupled to the RAM 22 in a normal fashion using data and address buses 24. An idle mode node of the processing core 20 is coupled directly to the data retention mode node of memory 22.

Accordingly, as shown in Figure 2b, the RAM's data retention node is pulled low whenever the active-low signal at the idle mode node ($\overline{\text{DSP idle mode}}$) is pulled low. If needed for a given design, an inverter can be placed between the processing core idle mode node and the data retention mode node, such that the RAM 22 is placed in data retention mode when the processing core 20 is in idle mode.

For the TEXAS INSTRUMENTS TMS320C54x family of DSP processors, a task scheduler enables an idle mode when there are no tasks to run. The task scheduler executes one of the several "idle mode" instructions of the C54x. There are three idle modes, activated by the IDLE1, IDLE2, and IDLE3 instructions. In these modes, the TMS320C54x devices enter a dormant state and dissipate considerably less power than in normal operation. The IDLE1 instruction is used to shut down the processing core 20 (i.e., stop clock cycles to the processing core). The IDLE2 instruction is used to shut down the processing core 10 and on-chip peripherals (not shown). The IDLE3 instruction is used to shut down the DSP 18 completely. This instruction stops the PLL circuitry as well as the processing core 20 and peripherals.

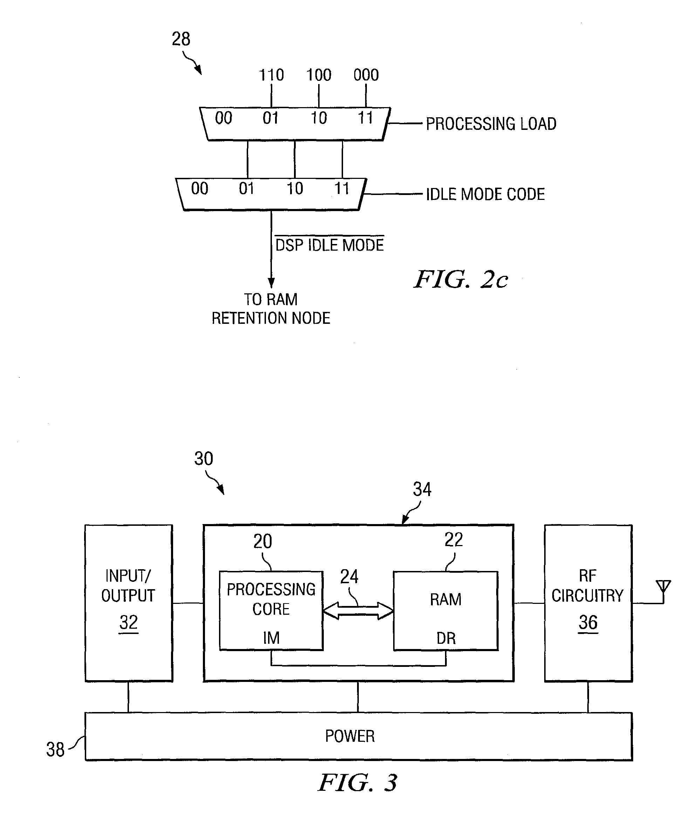

Each idle mode instruction generates a two-bit idle mode code to be placed on two nodes in the processing core. For purposes of illustration, the codes are "01" for an IDLE1 instruction, "10" for an IDLE2 instruction and "11" for an IDLE1 instruction. In an embodiment of a decoder 28 shown in Figure 2c, any or all of the idle mode instructions can cause an active idle mode signal. The two-bit idle mode code selects either a "0" or a "1" to be passed to the RAM data retention pin.

The task scheduler chooses the right idle mode instruction based on the anticipated tasks to do and maximum wake-up time allowed, as shown by the "processing load" signal in Figure 2c. The processing load signal determines which idle mode(s) will cause $\overline{\text{DSP idle mode}}$ to be pulled low (active) and place the memory 22 in data retention mode. For example, if the processing load signal is "11", then any of the three idle modes will cause $\overline{\text{DSP idle mode}}$ to be set to "0". If the processing load signal is "10", only the IDLE2 and IDLE3 instructions will set $\overline{\text{DSP idle mode}}$ to "0". If the processing load signal is "01", only the IDLE3 instruction will set $\overline{\text{DSP idle mode}}$ to zero.

Since waking up a RAM introduces some small delays prior to accessing the RAM, the decoding logic 28 can be configured to optimizing data retention mode based on processing load. This could be used in a mobile phone application, for example, to set the fastest wakeup mode (processing mode equals "01") while speech communication processing is being performed, while the greatest power saving mode (processing mode equals "11") could be used while the phone is in a paging mode.

This aspect of the invention provides the advantage that the memory can be placed in data retention mode responsive to which of several idle modes is selected. The greatest power savings can be achieved when all idle modes are selected, while a faster response can be achieved by placing the RAM in data retention mode when only the deepest idle mode(s) is selected.

Whenever the task scheduler wakes up the processing core from idle mode, the memory is returned to normal operation.

Thus, as is readily apparent by comparing Figures 1b and 2b, using the embodiment of Figure 2a greatly increases the time in which the RAM 10 is in retention mode. Additionally, the support for retention mode is created without any modification of existing software.

The additional time in idle mode should greatly reduce power leakage by the memory 22, especially in circuits using smaller geometries. In mobile phone applications, such as GSM DRX5 phones, the DSP inactivity approaches 99.9%. Often, the only processing is periodic processing of network information while the phone is in standby. For a GSM phone in standby mode, the DSP awakes every 5 milliseconds to determine if there is call to be started from the network. If there is, the phone awakes (the phone awakes also if the user is using the keypad or other interfaces). If there is not a call, however, the DSP returns to sleep after is processing is complete, which takes only a small fraction of the 5 millisecond cycle. In such an application, the present invention allows the RAM to enter data retention mode with the DSP, greatly reducing the memory leakage.

The embodiment shown in Figure 2 allows the RAM 22 to be in data retention mode for almost all of the inactive periods of the processing core 20. Accordingly, the battery life of the mobile phone is greatly increased.

Figure 3 illustrates a block diagram of a mobile phone using the present invention. Input/output devices 32 (such as a keypad, microphone and speaker) are coupled to the analog baseband circuitry 34. Analog baseband circuitry includes a processing core 20 or other processor having an idle mode output signal node (IM) and a RAM 22 having a data retention input signal node (DR). The idle mode output signal node of processing core 20 is coupled to the data retention input signal node of the RAM 22, and the two devices are coupled by data and address buses 24. The analog baseband circuitry 34 may include other hardware, such a an audio codec. The analog baseband circuitry is coupled to radio frequency (RF) circuitry 36. The input/output devices 32, analog baseband circuitry 34 and RF circuitry 36 are powered by power management circuitry 38.

In operation, the RAM 22 of the analog baseband circuitry 34 is placed in data retention mode each time that the idle mode output signal node is active. Accordingly, the power consumption of the device can be significantly reduced without any code modification in the processing core 20.

While the application has been described in connection with a DSP, it could be used with other types of processors as well. Further, the RAM could be any type of memory, including dynamic random access memory and static random access memory.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

**Claims**

1. A processing system comprising:

   a processor having an idle mode node for generating an idle mode signal indicating whether the processor is in an idle mode;
   a memory having a data retention node for receiving a data retention mode signal, and circuitry for placing the memory in a low power state responsive to the data retention mode signal;

   wherein the idle mode signal drives the data retention node.

2. The processing system of claim 1 wherein the processor has a plurality of idle mode states, and idle mode signal indicates which idle mode state is active.

3. The processing system of claim 2 wherein said processor includes decoding logic for driving said memory into a low power state responsive to selected idle mode states.

4. The processing system of claim 1 wherein the processor is a processing core of a digital signal processor and the memory is an internal memory of the digital signal processor.

5. A mobile communications device comprising:

   a processor having an idle mode node for generating an idle mode signal indicating whether the processor is in an idle mode;
   a memory having a data retention node for receiving a data retention mode signal, and circuitry for placing the memory in a low power state responsive to the data retention mode signal;

   wherein the idle mode signal drives the data retention node, such that the memory is placed in the low power state when the processor is in idle mode.

6. The mobile communication device of claim 5 wherein the processor has a plurality of idle mode states, and idle mode signal indicates which idle mode state is active.

7. The mobile communication device of claim 6 wherein said processor includes decoding logic for driving said memory into a low power state responsive to selected idle mode states.

8. A method of controlling data retention mode in a memory, comprising the steps of:

   generating an idle mode signal in a processor, indicating whether the processor is in an idle mode; and
   driving a data retention mode node in the memory with the idle mode signal.

**9.** The method of claim 8 wherein the processor has a plurality of idle mode states and the generating step comprises the step of indicating which idle mode state is active.

**10.** The method of claim 9 wherein said driving step comprises the step of driving the memory into a low power state responsive to selected idle mode states.

FIG. 1a
(PRIOR ART)

FIG. 1b

FIG. 2a

FIG. 2b

28

110  100  000

| 00 | 01 | 10 | 11 | — PROCESSING LOAD |

| 00 | 01 | 10 | 11 | — IDLE MODE CODE |

DSP IDLE MODE

TO RAM
RETENTION NODE

*FIG. 2c*

30

34

| INPUT/<br>OUTPUT<br><u>32</u> | PROCESSING<br>CORE<br><br>IM  20   24   22  RAM<br><br>DR | RF<br>CIRCUITRY<br><u>36</u> |

POWER

38

*FIG. 3*

**European Patent Office**

## EUROPEAN SEARCH REPORT

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | EP 0 855 718 A (HEWLETT PACKARD CO) 29 July 1998 (1998-07-29) * the whole document * ----- | 1-10 | G06F1/32 |
| X | US 6 249 837 B1 (TSUCHIYA MASAHIRO ET AL) 19 June 2001 (2001-06-19) * abstract * * column 2, line 55 - column 4, line 13; figures 1,2 * * column 6, line 46 - column 7, line 24; figure 8 * * column 8, line 36 - line 46 * ----- | 1-10 | |
| A | US 2003/163745 A1 (KARDACH JAMES P) 28 August 2003 (2003-08-28) * page 1, paragraph 2 * ----- | 2,3,6,7, 9,10 | |
| A | US 2002/144166 A1 (YU CHIA-HSING ET AL) 3 October 2002 (2002-10-03) * page 2, paragraph 24 - page 3, paragraph 29 * ----- | 1,5,8 | TECHNICAL FIELDS SEARCHED (Int.Cl.7) G06F |

The present search report has been drawn up for all claims

| Place of search | Date of completion of the search | Examiner |
|---|---|---|
| The Hague | 25 June 2004 | Schröter, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 29 3337

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2004

| Patent document cited in search report | | Publication date | Patent family member(s) | | Publication date |
|---|---|---|---|---|---|
| EP 0855718 | A | 29-07-1998 | EP | 0855718 A1 | 29-07-1998 |
| | | | JP | 10228340 A | 25-08-1998 |
| | | | US | 6128747 A | 03-10-2000 |
| US 6249837 | B1 | 19-06-2001 | JP | 10188567 A | 21-07-1998 |
| US 2003163745 | A1 | 28-08-2003 | WO | 03073253 A2 | 04-09-2003 |
| US 2002144166 | A1 | 03-10-2002 | NONE | | |

EPO FORM P0459

For more details about this annex : see Official Journal of the European Patent Office, No. 12/82